# EUROPEAN PATENT APPLICATION

(11) **EP 0 986 283 A2**
(43) Date of publication of application: **15.03.2000**
(21) Application number: 99116233.0
(22) Date of filing: 17.08.1999
(51) Int. Cl.: H04Q 11/04, H04L 12/64

(54) **Speech transmitting device and method over a packet network**

(30) Priority: 07.09.1998 JP 25221498
(71) Applicant: MITSUBISHI DENKI KABUSHIKI KAISHA, Tokyo 100-8310 (JP)
(72) Inventor: Fushimi, Wataru, Chiyoda-ku, Tokyo 100-8310 (JP)
(74) Representative: Pfenning, Meinig & Partner GbR

(57) **Abstract**

A speech transmitting device includes a signal processing unit for carrying out plural types of speech signal processes by using a speech signal in a received packet, an alignment state detecting unit for detecting an alignment state of the received packet, and a process selecting unit for selecting a speech signal process which corresponds to the alignment state being detected by the alignment state detecting means, based on a selection reference used to select the speech signal process in correspondence to the alignment state of the received packet, and then outputting a result which is processed by the signal processing means according to the selected speech signal process.

## Description

### BACKGROUND OF THE INVENTION

### 1. Field of the Invention

The present invention relates to a speech transmitting device and a speech transmitting method.

### 2. Description of the Related Art

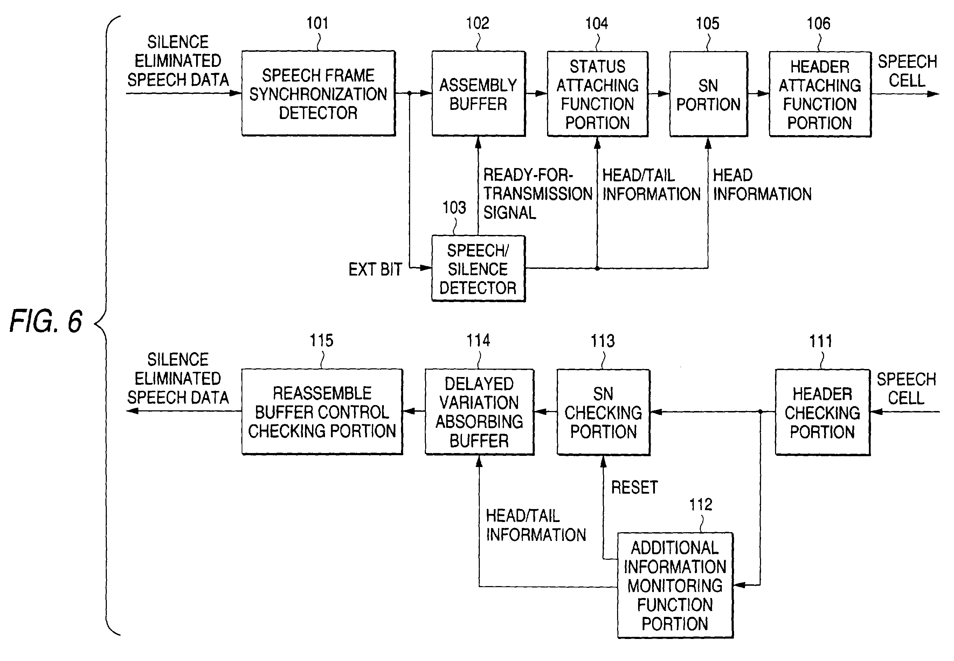

FIG. 6 shows a speech transmitting device in the prior art, which is disclosed in Patent Application Publication (KOKAI) Hei 9-200213, for example. The speech transmitting device in the prior art shown in FIG.6 comprises a transmitter portion which includes a speech frame synchronization detector 101 for accomplishing the synchronization of a speech frame, an assembly buffer 102 for accumulating speech frames to send out the speech frame cell by cell, a speech/silence detector 103 for deciding whether or not the cell is speech/silence, a status attaching function portion 104 for attaching information such that the cell is positioned at the head/tail of the frame, etc., an SN (Sequential number) portion 105 for attaching a sequential number to the cell, and a header attaching function portion 106 for attaching a header to a prepared payload, and a receiver portion which includes a header checking portion 111 for looking up the header to check whether or not the cell is sent to its own device, an additional information monitoring function portion 112 for detecting the information such that the cell is positioned at the head/tail of the frame, etc., an SN checking portion 113 for checking the sequential number of the cell, a delayed variation absorbing buffer 114 for absorbing delayed variation of the cell, and a reassemble buffer control checking portion 115 for formatting the cell into the frame.

A detecting function of detecting speech/silence information of the speech information in generating the cell is provided on the transmitter side. The cell is generated by attaching information indicating the head of speech information to the payload of the first cell of the speech cells and attaching information indicating the tail of speech information to the payload of the last cell of the speech cells respectively. At that time, the sequential numbers are assigned to respective cells and then only the speech cells are sent out.

The sequential numbers are checked on the receiver side based on additional information of the received cell, and then the speech information are reproduced by carrying out cell extrapolation at the time of detecting the cell discard. When the silence information are reproduced on the receiver side, reproduction of the silence information is started after the speech cell with the tail information has been reproduced, and then the silence information are reproduced until reproduction of the succeedingly received speech cell becomes available.

With the above, the speech/silence information are reproduced by attaching the head/tail information to the payload of the cell, and executing control of checking of the sequential number and control of the delayed variation absorbing buffer 114 based on the additional information on the receiver side.

Next, a detailed operation will be explained hereunder. In the transmitter portion, the speech frame synchronization detector 101 monitors always the synchronization of the speech frames of received silence eliminated speech signals, and accumulated the speech frames in the assembly buffer 102 in unit of the speech frame. The assembly buffer 102 accumulates the speech frames, and then sends out the data of one cell to the status attaching function portion 104 in response to a ready-for-transmission signal issued from the speech/ silence detector 103.

The speech/silence detector 103 decides speech and silence of the speech frame over two frames, and also decides the head and tail of the speech information. Then, the speech/silence detector 103 sends out the ready-for-transmission signal to the assembly buffer 102, sends out the head/tail information to the status attaching function portion 104, and sends out head information to the SN portion 105.

The status attaching function portion 104 attaches the head/ tail information supplied from the speech/silence detector 103 to the one cell data supplied from the assembly buffer 102, and then sends out the one cell data to the SN portion 105. The SN portion 105 generates the payload portion of the cell by assigning the sequential number to the data to which the head/tail information is attached by the status attaching function portion 104.

The header attaching function portion 106 generates an ATM cell by attaching the header to the payload portion of the cell being generated by the SN portion 105, and then sends out the ATM cell onto an ATM network.

In contrast, in the receiver portion, the header checking portion 111 fetches the cell from the ATM network, and then checks the header of the received cell. The header checking portion 111, if decides that the received cell is directed to own device, sends out the received cell to the additional information monitoring function portion 112 and the SN checking portion 113.

The additional information monitoring function portion 112 detects the additional information in the payload of the received cell, and outputs a reset signal to the SN checking portion 113 to set an expected value of the sequential number in the SN checking portion 113 into 0 if it has been decided that the additional information corresponds to the head information.

After this, the additional information monitoring function portion 112 outputs the head information to the delayed variation absorbing buffer 114 to set an initial accumulation timer in the delayed variation absorbing buffer 114. Also, the additional information monitoring function portion 112, if detects that the additional information of the received cell corresponds to the tail information, outputs the tail information to the delayed variation absorbing buffer 114 to set a last cell address in the delayed variation absorbing buffer 114.

The SN checking portion 113 checks the sequential number of the received cell, then executes the cell extrapolation if it detects cell discard, and then accumulates the received cell in the delayed variation absorbing buffer 114. After the initial accumulation has been completed, the delayed variation absorbing buffer 114 accumulates the TDM (Time Division Multiple) data in the reassemble buffer control checking portion 115 cell by cell, and sends out the TDM data.

After the delayed variation absorbing buffer 114 has sent out the data up to the last cell address, it starts reproduction of the silence data. And, the delayed variation absorbing buffer 114 continues to reproduce the silence data until reproduction of the speech data in the reassemble buffer control checking portion 115 becomes available after the initial accumulation of the newly received cell has been completed.

In the speech transmitting device in the prior art, an identifier is attached to the payload portion of the cell of the speech data to discriminate the speech/silence portions, and then the additional information monitoring function portion is provided to detect this identifier. However, there are problems that the additional information monitoring function portion is complicated in structure and thus a cost of the device is increased higher. In addition, if cell discard is generated and thus the cell which contains the tail information of the speech portion as the additional information comes out, the cell is recognized as the speech portion and thus the extrapolation process is executed even though in principle such cell corresponds to the silence portion. As a result, there has been such a problem that the above false process is executed and therefore speech quality is deteriorated.

### SUMMARY OF THE INVENTION

The present invention has been made to overcome the above problems, and it is an object of the present invention to provide a speech transmitting device with high quality at the low costs.

A speech transmitting device according to the present invention, comprises a signal processing means for carrying out plural types of speech signal processes by using speech signals in received packets; an alignment state detecting means for detecting an alignment state of the received packets; and a process selecting means for selecting a speech signal process which corresponds to the alignment state being detected by the alignment state detecting means, based on a selection reference employed to select the speech signal process in correspondence to the alignment state of the received packets, and then outputting a result which is processed by the signal processing means according to the selected speech signal process.

Also, the signal processing means comprises a speech decoding means for decoding the speech signal, an extrapolation processing means for executing an extrapolation process, and a noise generating means for generating noises.

Also, the process selecting means selects the speech decoding means out of the signal processing means, and then outputs a process result thereof if a result detected by the alignment state detecting means can be given as a predetermined alignment.

Also, the alignment state detecting means detects an omitted number of the received packets as a detection result of the alignment state of the received packets, and the process selecting means selects the extrapolation processing means out of the signal processing means, and then outputs a process result thereof if the omitted number of the received packets being detected by the alignment state detecting means is one or more but does not exceed a predetermined selection reference.

Also, the alignment state detecting means detects the omitted number of the received packets as a detection result of the alignment state of the received packets, and the process selecting means selects the noise generating means out of the signal processing means, and then outputs a process result thereof if the omitted number of the received packets being detected by the alignment state detecting means is in excess of the predetermined selection reference.

Also, the signal processing means executes either the extrapolation process or the noise generating process based on information supplied from the speech decoding means.

Further, there is provided a period uniforming means for making a period of the received packet constant.

Furthermore, there is provided a selection reference controlling means for controlling the selection reference employed in the process selecting means.

Furthermore, there is provided a speech level detecting means for detecting a speech signal level of the decoded speech signal, and the selection reference controlling means controls the selection reference based on a detection result detected by the speech level detecting means.

A speech transmitting method according to the present invention, comprises the steps of detecting an alignment state of received packets, selecting a speech signal process, which corresponds to the detected alignment state, out of plural types of speech signal processes which use speech signals in the received packets, based on a selection reference which is employed to select a speech signal process in correspondence to the alignment state of the received packets, and outputting a process result derived by the selected speech signal process.

### BRIEF DESCRIPTION OF THE DRAWINGS

FIG.1 is a block diagram showing a configuration of a speech transmitting device according to a first embodiment of the present invention;
FIG.2 is a view showing an example of a configuration of a network to which the speech transmitting devices according to the present invention and in the prior art is applied;
FIG. 3 is a flowchart showing an operation of the speech transmitting device according to the first embodiment of the present invention;
FIG. 4 is a block diagram showing a configuration of a speech transmitting device according to a second embodiment of the present invention;
FIG. 5 is a flowchart showing an operation of the speech transmitting device according to the second embodiment of the present invention; and
FIG. 6 is a block diagram showing a configuration of a conventional speech transmitting device.

### DETAILED DESCRIPTION OF THE PREFERRED EMBODIMENTS

Now, a description will be given in more detail of preferred embodiments of the present invention with reference to the accompanying drawings.

### (Embodiment 1)

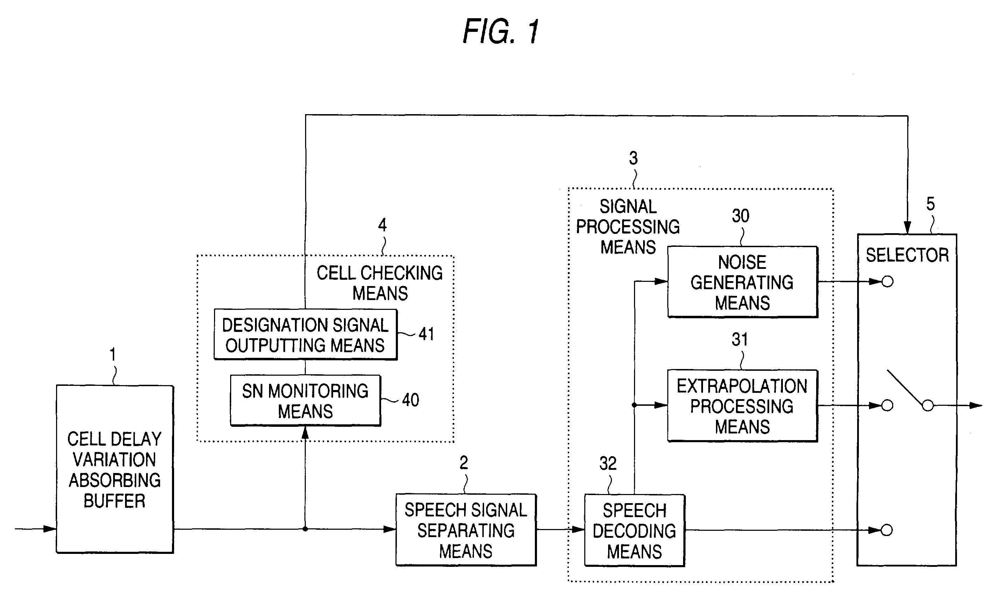

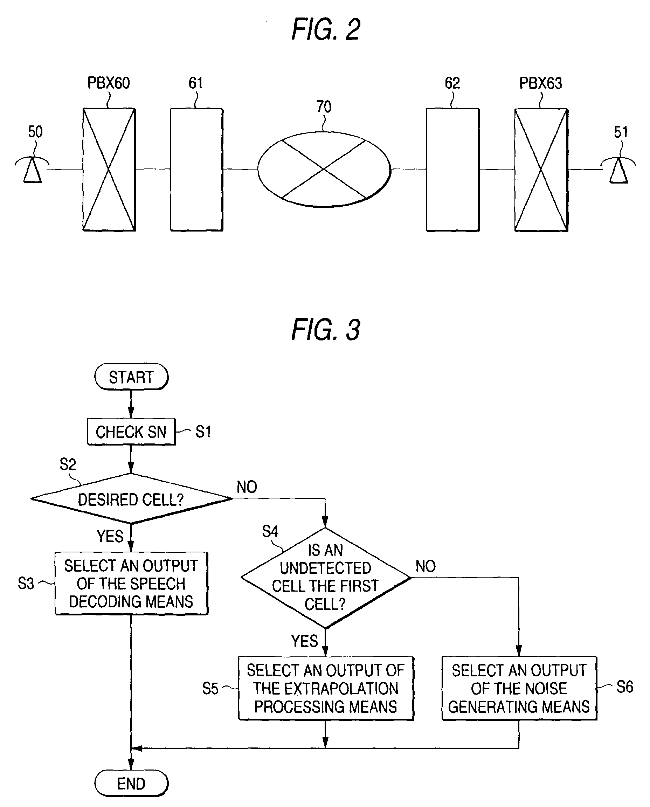

FIG. 1 is a view showing a configuration of a speech transmitting device according to a first embodiment of the present invention, which is applied to a network configuration as shown in FIG.2, for example. In FIG.2, 50, 51 denote a telephone terminal respectively; 60, 63, a PBX (Private Branch eXchange) respectively; 61, 62, a speech transmitting device respectively; and 70, a transmission line network. For example, a speech signal is transmitted from the telephone terminal 50 to the speech transmitting device 61 via the PBX 60. The speech transmitting device 61 decides whether the speech signal is speech or silence, then formats the speech signal into the cell, and then sends out the speech portion onto the transmission line network 70 as the speech cell and also assigns a sequential number (SN) to the cell (in the case of ATM, the sequential number is assigned to a header). This speech cell is transmitted to the speech transmitting device 62 via the transmission line network 70. The speech transmitting device 62 checks by using SN that the transmitted speech cell has been received in correct sequence, or that an omission of the cell is caused, and then applies predetermined processes according to the checked result to assemble the cell into the speech signal. Then, the assembled speech signal is supplied to the telephone terminal 51 via the PBX 63.

FIG. 1 shows a configuration of a speech transmitting device 62 on the receiver side, which receives the speech cell from the transmission line network 70 and sends out the speech signal to the PBX 63. In FIG.1, 1 denotes a cell delay variation absorbing buffer serving as a period uniforming means which makes constant an arrival period of the cell being supplied via the transmission line network 70; 2, a speech signal separating means for separating the speech signal in the cell from the header; 3, a signal processing means for applying processes of speech decoding, etc. to the speech signal; 4, a cell checking means serving as a packet checking means which checks an alignment state of the received packet, e.g., cell omission is caused, and the like; and 5, a selector for selecting one of a plurality of processing means provided to the signal processing means 3 in compliance with an output signal supplied from the cell checking means. Also, 30 denotes a noise generating means provided to the signal processing means 3 to generate background noises; 31, an extrapolation processing means provided to the signal processing means 3 to execute the extrapolation process; and 32, a speech decoding means provided to the signal processing means 3 to decode coded speech. And, 40 denotes an SN monitoring means provided to the cell checking means 4 to monitor the sequential number, and 41 denotes a designation signal outputting means for outputting a designation signal, which designates one of a plurality of processing means provided to the signal processing means 3 based on the monitored result of the SN monitoring means 40, to the selector 5.

Then, operations will be explained hereunder. In the speech cells being sent out to the transmission line network 70 at a constant period, variation is caused in a sending-out interval of the speech cells due to various factors in the transmission line network 70. The cell delay variation absorbing buffer 1, when receives the speech cells from the transmission line network 70, absorbs such variation and sends out the cells at a constant period. The speech cells being output from the cell delay variation absorbing buffer 1 are sent out to the speech signal separating means 2 and the cell checking means 4. The speech signal separating means 2 separates the speech signal in the input speech cell and the header, and then outputs this separated speech signal to the signal processing means 3.

In contrast, the SN monitoring means 40 in the cell checking means 4 is being monitoring the sequential number, and outputs the detection result to the designation signal outputting means 41 if the desired cell arrives. When the designation signal outputting means 41 has received from the SN monitoring means 40 the detection result to the effect that the cell with the desired sequential number has arrived, such means 41 outputs to the selector 5 the designation signal which indicates to select the output supplied from the speech decoding means 32. The speech decoding means 32 decodes the coded speech signal being sent from the speech signal separating means 2. The selector 5 selects the output of the speech decoding means 32 in accordance with the designation signal being received from the designation signal outputting means 41, and then outputs the decoded speech signal to the PBX 63.

If the SN monitoring means 40 detects that the desired cell has not arrived, e.g., detects that one of the sequential numbers is omitted during when it monitors the sequential number, such SN monitoring means 40 outputs this detection result to the designation signal outputting means 41. The designation signal outputting means 41, when receives from the SN monitoring means 40 the detection result such that one of the sequential numbers is omitted, outputs to the selector 5 the designation signal which indicates to select the output of the extrapolation processing means 31. Based on the speech signal contained in the cell, the extrapolation processing means 31 reproduces the speech signal via extrapolation by using decoder internal parameter information issued from the speech decoding means 32. The selector 5 selects the output of the extrapolation processing means 31 in accordance with the designation signal being supplied from the designation signal outputting means 41, and then outputs the speech signal reproduced via the extrapolation to the PBX 63.

If the SN monitoring means 40 detects that the desired cell has not arrived, e.g., detects the second sequential number of two sequential numbers which are omitted successively during when such SN monitoring means 40 monitors the sequential number, the above SN monitoring means 40 outputs this detection result to the designation signal outputting means 41. The designation signal outputting means 41, when has received from the SN monitoring means 40 the detection result such that the second sequential number of two sequential numbers which are omitted successively is detected, outputs to the selector 5 the designation signal which indicates to select the output of the noise generating means 30. If the speech cells are not sent out from the transmitter side because of silence and thus no received cell exists, the noise generating means 30 generates the background noise such as a comfortable noise, etc. not to render the caller to hear the abnormal speech or not to cause an uncomfortable feeling in the caller. In order to generate such comfortable noise, etc., the more comfortable background noise can be generated by using the decoder internal parameter information supplied from the speech decoding means 32, etc. The selector 5 selects the output of the noise generating means 30 in accordance with the designation signal being supplied from the designation signal outputting means 41, and then outputs the background noise signal to the PBX 63.

Next, operations of the cell checking means 4 and the selector 5 will be explained by using a flowchart in FIG. 3 hereunder. The SN monitoring means 40 in the cell checking means 4 checks the sequential number of the cell at a timing when the speech cells are output from the cell delay variation absorbing buffer 1 (step S1), then decides whether or not the cell corresponds to the desired cell (step S2), and then outputs this checked result to the designation signal outputting means 41. If the designation signal outputting means 41 has received from the SN monitoring means 40 the checked result such that the cell with the desired sequential number has been obtained (if YES in step S2), such designation signal outputting means 41 outputs the designation signal to select the output of the speech decoding means 32. Then, the selector 5 selects the output of the speech decoding means 32 in compliance with the designation signal being received from the designation signal outputting means 41 (step S3).

If the designation signal outputting means 41 has received from the SN monitoring means 40 the checked result such that the cell with the desired sequential number has not been detected (if NO in step S2), it is decided whether or not an undetected cell is the first cell or such undetected cell is the second cell and forth out of a plurality of cells being not successively detected (step S4). If the designation signal outputting means 41 receives from the SN monitoring means 40 the checked result to the effect that the undetected cell is the first cell (if YES in step S4), it decides that the desired cell has not arrived because of the cell discard, etc., and outputs the designation signal to select the output of the extrapolation processing means 31. Then, the selector 5 selects the output of the extrapolation processing means 31 in compliance with the designation signal being received from the designation signal outputting means 41 (step S5). Where the term "the first cell" means the concerned cell if the undetected cell is composed of a single cell, and means the first cell if the undetected cells are composed of two successive cells or more.

Also, if the designation signal outputting means 41 has received from the SN monitoring means 40 the checked result such that the undetected cell is the second cell and after out of a plurality of cells being not successively detected (if NO in step S4), such designation signal outputting means 41 decides that the cell has not been sent out because of silence, and then outputs the designation signal to select the output of the noise generating means 30. Then, the selector 5 selects the output of the noise generating means 30 in compliance with the designation signal being received from the designation signal outputting means 41 (step S6).

As described above, the speech transmitting device comprises the signal processing means for carrying out plural types of speech signal processes by using a speech signal in a received packet, the alignment state detecting means for detecting an alignment state of the received packet, and the process selecting means for selecting a speech signal process which corresponds to the alignment state being detected by the alignment state detecting means, based on a selection reference used to select the speech signal process in correspondence to the alignment state of the received packet, and then outputting a result which is processed by the signal processing means according to the selected speech signal process. Therefore, since the processing means for the speech cell can be selected only by the check result of the sequential number, the configuration can be formed at a low cost and also high quality communication speech can be provided no matter which cells like the first cell, the last cell, etc. of the speech frame are discarded.

In the prior art, if decision is made merely by the sequential number, buffering of at least one cell must be needed in order to discriminate the case the desired cell has not arrived because of generation of the cell discard and the case the desired cells have not arrived successively because the cells are not sent out due to silence. In the present invention, such buffering is not needed and thus delay in process can be reduced.

If selection of the selector 5 is switched to the output of the noise generating means 30 because the desired cells are not arrived successively, the same advantages can be achieved even though the selection reference, which is employed by the selector 5 to switch its input to the output of the noise generating means 30 after a predetermined number of cells, e.g., two continuous cells, or three continuous cells or more, or four continuous cells or more, etc., have not arrived successively is changed according to the application system.

In the present embodiment, the alignment state detecting means is divided into the cell (packet) checking means 4 and the selector 5. However, such alignment state detecting means may be formed as a single means, or other functional dividing ways may be applied.

### (Embodiment 2)

In the above embodiment 1, the selection reference employed to decide which signal process must be selected by the designation signal outputting means 41 is kept constant in operation. Next, an embodiment will be explained wherein the selection reference for the designation signal outputting means 41 can be changed in process appropriately according to the speech level, etc. at that time.

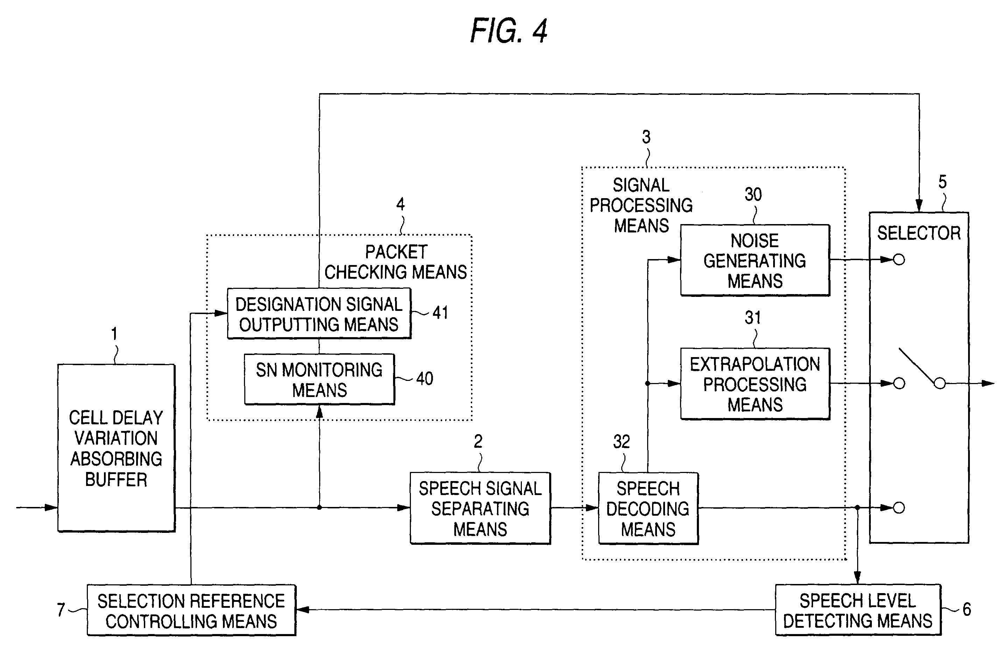

FIG.4 is a block diagram showing a configuration of the receiver side which receives the speech signal from the transmission line network and transmits it to the PBX, in a speech transmitting device employed in the above case. In FIG.4, 6 denotes a speech level detecting means for detecting the speech level output from the speech decoding means 32, and 7 denotes a selection reference controlling means for controlling the selection reference of the designation signal outputting means 41. Other constituent elements are similar to those in FIG. 1.

Next, an operation will be explained hereunder. The speech level detecting means 6 detects the speech level output from the speech decoding means 32, and transmits the detection result to the selection reference controlling means 7. The selection reference controlling means 7 controls the selection reference of the designation signal outputting means 41, based on the detection result of the speech level detecting means 6. If the speech level being detected by the speech level detecting means 6 is high, the selection reference controlling means 7 decides that the speech spurt is continued. While, if the desired cells have not successively received under such high speech level, the selection reference controlling means 7 increases a selection reference value so as to continue the extrapolation process as long as possible. Such selection reference value provides a certain number at which the extrapolation process must be executed when the number of the cells, which have not been successively received in the designation signal outputting means 41, is reduced below the certain number.

In addition, if the speech level detected by the speech level detecting means 6 is low, the selection reference controlling means 7 decides that this state is close to the silence state. While, if the desired cells have not successively received under such low speech level, the selection reference controlling means 7 decreases the selection reference value so as to switch the process to the noise generating process as quickly as possible. Such selection reference value provides another certain number at which the noise generating process must be executed when the number of the cells, which have not been successively received in the designation signal outputting means 41, is in excess of another certain number.

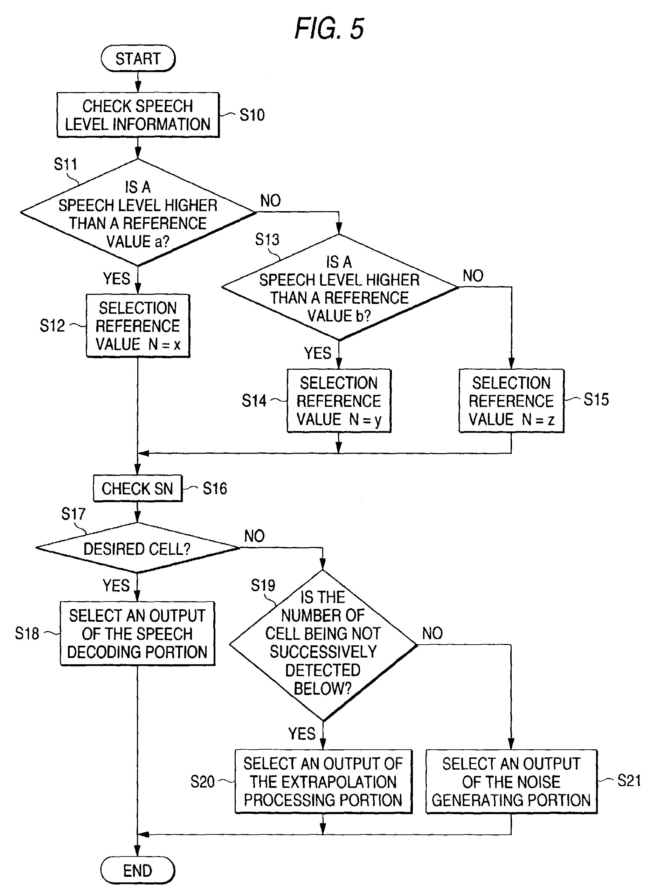

Next, the operation of the speech level detecting means 6, the selection reference controlling means 7, and the designation signal outputting means 41 will be explained with reference to a flowchart in FIG. 5 hereunder. First, the selection reference controlling means 7 checks speech level information supplied from the speech level detecting means 6 which detects the speech level output from the speech decoding means 32 (step S10). It is decided whether or not the speech level is higher than a speech level reference value a (step S11). If the speech level is higher than the speech level reference value a (if YES in step S11), the selection reference value N is set to x (step S12). If the speech level is lower than the speech level reference value a (if NO in step S11), it is decided whether or not the speech level is higher than a speech level reference value b (step S13). If the speech level is higher than the speech level reference value b (if YES in step S13), the selection reference value N is set to y (step S14). If the speech level is lower than the speech level reference value b (if NO in step S13), the selection reference value N is set to z (step S15). Where the speech level reference value a, b are set as a ≥ b, and the set values of the selection reference value are set as x ≥ y ≥ z.

Next, the SN monitoring means 40 checks the sequential number of the cells at a timing when the speech cell is output from the cell delay variation absorbing buffer 1 (step S16). It is decided that the desired cell has been received (step S17). This checked result is output to the designation signal outputting means 41. If the designation signal outputting means 41 receives the checked result such that the desired cell with the desired sequential number has been received from the SN monitoring means 40 (if YES in step S17), it outputs the designation signal to select the output of the speech decoding means 32 and then the selector 5 selects the output of the speech decoding means 32 in accordance with the designation signal being supplied from the designation signal outputting means 41 (step S18).

In contrast, if the designation signal outputting means 41 receives the checked result indicating that the cell with the desired sequential number has not been received from the SN monitoring means 40 (if NO in step S17), it decides whether or not the number of the cells which have not been successively received is below N (step S19). If the designation signal outputting means 41 receives the checked result indicating that the number of the cells which have not been successively received is below N from the SN monitoring means 40 (if YES in step S19), it decides that the desired cell has not arrived because of the cell discard, etc. and then outputs the designation signal to select the output of the extrapolation processing means 31. Then, the selector 5 selects the output of the extrapolation processing means 31 in compliance with the designation signal supplied from the designation signal outputting means 41 (step S20).

If the designation signal outputting means 41 receives the checked result indicating that the number of the cells which have not been successively received is in excess of N from the SN monitoring means 40 (if NO in step S19), it decides that the cell is not sent out because of silence and then outputs the designation signal to select the output of the noise generating means 30. Then, the selector 5 selects the output of the noise generating means 30 in compliance with the designation signal supplied from the designation signal outputting means 41 (step S21).

As described above, since the speech level detecting means which detects the speech signal level of the decoded speech signal and the selection reference controlling means which controls the selection reference based on the checked result being detected by the speech level detecting means are provided, the communication speech with higher quality can be provided in addition to the same advantages as those in the first embodiment of the present invention.

In the second embodiment, two types of the speech level reference values a, b are set. However, the same advantages can be achieved if three types or more of the speech level reference values may be set according to the application systems.

In the second embodiment, the selection reference controlling means 7 controls the selection reference based on the speech signal level of the decoded speech signal. However, the same advantages can be achieved if the selection reference controlling means 7 controls the selection reference based on information such as the decoder internal parameters supplied from the speech decoding means 32, etc.

The speech transmitting device comprises the signal processing means for carrying out plural types of speech signal processes by using speech signals in received packets, the alignment state detecting means for detecting the alignment state of the received packets, and the process selecting means for selecting the speech signal process which corresponds to the alignment state being detected by the alignment state detecting means, based on a selection reference employed to select the speech signal process in correspondence to the alignment state of the received packets, and then outputting a result which is processed by the signal processing means according to the selected speech signal process. Therefore, since the speech cell processing means are selected based on the selection reference which is employed to select the speech signal process corresponding to the received packet alignment state, the high quality speech transmitting device can be provided at a low cost.

The signal processing means comprises the speech decoding means for decoding the speech signal, the extrapolation processing means for executing the extrapolation process, and the noise generating means for generating noises. Therefore, since the appropriate processing means can be selected, the high quality speech transmitting device can be provided at a low cost.

The process selecting means selects the speech decoding means out of the signal processing means, and then outputs the process result thereof if the result detected by the alignment state detecting means can be given as the predetermined alignment. Therefore, since the speech cell processing means are selected based on the selection reference which is employed to select the speech signal process corresponding to the received packet alignment state, the high quality speech transmitting device can be provided at a low cost.

The alignment state detecting means detects the omitted number of the received packets as the detection result of the alignment state of the received packets, and the process selecting means selects the extrapolation processing means out of the signal processing means, and then outputs the process result thereof if the omitted number of the received packets being detected by the alignment state detecting means is more than one but does not exceed a predetermined selection reference. Therefore, since the speech cell processing means are selected based on the selection reference which is employed to select the speech signal process corresponding to the received packet alignment state, the high quality speech transmitting device can be provided at a low cost.

The alignment state detecting means detects the omitted number of the received packets as the detection result of the alignment state of the received packets, and the process selecting means selects the noise generating means out of the signal processing means, and then outputs a process result thereof if the omitted number of the received packets being detected by the alignment state detecting means is in excess of the predetermined selection reference. Therefore, since the speech cell processing means are selected based on the selection reference which is employed to select the speech signal process corresponding to the received packet alignment state, the high quality speech transmitting device can be provided at a low cost.

The signal processing means executes either the extrapolation process or the noise generating process based on information supplied from the speech decoding means. Therefore, since the process which is fitted for the situation can be executed, the high quality speech transmitting device can be provided at a low cost.

The speech transmitting device further comprises the period uniforming means for making a period of the received packet constant. Therefore, since the received packet alignment state can be detected more precisely, the high quality speech transmitting device can be provided at a low cost.

The speech transmitting device further comprises the selection reference controlling means for controlling the selection reference employed in the process selecting means. Therefore, since fine control can be carried out in answer to the situations, the high quality speech transmitting device can be provided at a low cost.

The speech transmitting device further comprises the speech level detecting means for detecting a speech signal level of the decoded speech signal, and wherein the selection reference controlling means for controlling the selection reference based on the detection result detected by the speech level detecting means. Therefore, since fine control can be carried out in answer to the situations, the high quality speech transmitting device can be provided at a low cost.

The speech transmitting method comprising the steps of detecting the alignment state of received packets, selecting the speech signal process which corresponds to the detected alignment state out of plural types of speech signal processes which use speech signals in the received packets, based on a selection reference which is employed to select a speech signal process in correspondence to the alignment state of the received packets, and outputting the process result derived by the selected speech signal process. Therefore, since the speech cell processing means are selected based on the selection reference which is employed to select the speech signal process corresponding to the received packet alignment state, the high quality speech transmitting method can be provided at a low cost.

## Claims

1. A speech transmitting device comprising:
a signal processing means for carrying out plural types of speech signal processes by using speech signals in received packets;
an alignment state detecting means for detecting an alignment state of the received packets; and
a process selecting means for selecting a speech signal process which corresponds to the alignment state detected by said alignment state detecting means, based on a selection reference employed to select the speech signal process in correspondence to the alignment state of the received packets, and then outputting a result which is processed by said signal processing means according to the selected speech signal process.

2. A speech transmitting device according to claim 1,
wherein said signal processing means comprises a speech decoding means for decoding the speech signal, an extrapolation processing means for executing an extrapolation process, and a noise generating means for generating noises.

3. A speech transmitting device according to claim 2,
wherein said process selecting means selects the speech decoding means out of said signal processing means, and then outputs a process result thereof if a result detected by said alignment state detecting means can be given as a predetermined alignment.

4. A speech transmitting device according to claim 2,
wherein said alignment state detecting means detects an omitted number of the received packets as a detection result of the alignment state of the received packets; and
wherein said process selecting means selects the extrapolation processing means out of said signal processing means, and then outputs a process result thereof if the omitted number of the received packets being detected by said alignment state detecting means is one or more but does not exceed a predetermined selection reference.

5. A speech transmitting device according to claim 2,
wherein said alignment state detecting means detects the omitted number of the received packets as a detection result of the alignment state of the received packets; and
wherein said process selecting means selects the noise generating means out of said signal processing means, and then outputs a process result thereof if the omitted number of the received packets being detected by said alignment state detecting means is in excess of the predetermined selection reference.

6. A speech transmitting device according to claim 3,
wherein said signal processing means executes either said extrapolation process or said noise generating process based on information supplied from said speech decoding means.

7. A speech transmitting device according to claim 1, further comprising:
a period uniforming means for making a period of the received packet constant.

8. A speech transmitting device according to claim 1, further comprising:
a selection reference controlling means for controlling said selection reference employed in said process selecting means.

9. A speech transmitting device according to claim 8, further comprising:
a speech level detecting means for detecting a speech signal level of the decoded speech signal; and
wherein said selection reference controlling means for controlling the selection reference based on a detection result detected by said speech level detecting means.

10. A speech transmitting method comprising the steps of:
detecting an alignment state of received packets;
selecting a speech signal process, which corresponds to said detected alignment state, out of plural types of speech signal processes which use speech signals in the received packets, based on a selection reference which is employed to select a speech signal process in correspondence to the alignment state of the received packets; and
outputting a process result derived by the selected speech signal process.
